# EUROPEAN PATENT APPLICATION

(11) **EP 4 700 504 A1**
(43) Date of publication of application: **25.02.2026**
(21) Application number: 24792428.5
(22) Date of filing: 21.03.2024
(51) Int. Cl.: G05B 19/05, G06F 13/36

(54) **ASSISTANCE DEVICE, ASSISTANCE METHOD, AND ASSISTANCE PROGRAM**

(30) Priority: 19.04.2023 JP 2023068743
(71) Applicant: OMRON Corporation, Kyoto-shi, Kyoto 600-8530 (JP)
(72) Inventor: ICHIMURA, Ryo, Kyoto-shi, Kyoto 600-8530 (JP); TAMASHIMA, Daisuke, Kyoto-shi, Kyoto 600-8530 (JP); IKEO, Yuji, Kyoto-shi, Kyoto 600-8530 (JP)
(74) Representative: Becker, Eberhard
(86) International application number: PCT/JP2024/011043
(87) International publication number: WO 2024/219152

(57) **Abstract**

The present invention separately displays: a first setting screen (240) for setting the function of a first bus connected to one side of a control device; and a second setting screen (250) for setting the function of a second bus connected to the opposite side of the control device.

## Description

### Technical Field

The present invention relates to an assistance device, etc. connected to a control device that controls the operations of machinery and equipment.

### Background Technology

An assistance device for supporting development of a control system using a control device such as a PLC (Programmable Logic Controller) is known as conventional technology. Patent Document 1 discloses an assistance device for supporting condition setting of a unit (for example, an IO unit) connected to one side of a CPU unit via a bus. The assistance device includes a function of displaying a connection state between the CPU unit and the IO unit, a function of selecting a unit that is a target for setting conditions, etc.

### Related Art Documents

### Patent Documents

Patent Document 1: Japanese Patent Application Laid-Open No. 2006-259938

### SUMMARY OF INVENTION

### Problem to be Solved by the Invention

However, Patent Document 1 has a configuration in which units are connected only to one side of the CPU unit, and does not mention a configuration in which units are also connected to the other side of the CPU unit. In the case where units are connected to both left and right sides of the CPU unit, and in the case where left and right buses have different standards, it is required to clarify the functions that each bus can execute.

One aspect of the present invention aims to clarify the functions executable by multiple buses connected to a control device.

### Means for Solving the Problem

In order to solve the above problem, an assistance device according to one aspect of the present invention is an assistance device communicably connected to a control device, and includes a display part capable of displaying predetermined information; and a display control part separately displaying on the display part a first screen for setting a function of a first bus connected to one side of the control device, and a second screen for setting a function of a second bus connected to the control device on an opposite side from the one side.

In order to solve the above problem, an assistance method according to one aspect of the present invention is an assistance method used in an assistance device that is communicably connected to a control device and includes a display part capable of displaying predetermined information. The assistance method includes displaying separately on the display part a first screen for setting a function of a first bus connected to one side of the control device, and a second screen for setting a function of a second bus connected to the control device on an opposite side from the one side.

In order to solve the above problem, an assistance program according to one aspect of the present invention is an assistance program used in an assistance device that is communicably connected to a control device and includes a display part capable of displaying predetermined information. The assistance program causes a computer to execute processing for displaying separately on the display part a first screen for setting a function of a first bus connected to one side of the control device, and a second screen for setting a function of a second bus connected to the control device on an opposite side from the one side.

According to the above configuration, the first screen for setting functions of the first bus and the second screen for setting functions of the second bus are displayed separately, so the functions executable by each bus are also displayed separately. This clarifies the functions executable by each bus, so that the user can easily set the functions to be executed by each bus. In addition, the user can easily grasp which bus function is being set. Further, in the case of one of the buses being an existing device, the function setting method for the existing bus can be used in the same manner as before, thereby improving convenience for the user.

A function settable to the first bus and a function settable to the second bus may be different.

According to the above configuration, by separately displaying the functions settable to the first bus and the functions settable to the second bus, the functions settable to each bus become clear, allowing the user to easily grasp the functions executable by each bus. Further, by making the functions settable to the first bus different from the functions settable to the second bus, one bus can correspond to existing functions and the other bus can correspond to new functions. This enables the existing functions to be used in the same manner as before without changing operability, thereby improving convenience for the user.

The display control part may display on the display part an image simulating the control device, an image simulating a unit connected to the first bus, and an image simulating a unit connected to the second bus while reflecting an actual connection state.

According to the above configuration, the user can grasp the connection state and overall view of the control device, the unit connected to the first bus, and the unit connected to the second bus at a glance.

The display control part may display on the display part information of a width that is a sum of a width of the control device, a width of the first bus, and a width of the second bus.

According to the above configuration, the user can grasp whether it is possible to store the control device, the unit connected to the first bus, and the unit connected to the second bus in a control panel.

The display control part may display on the display part information of power consumption of the first bus and information of power consumption of the second bus.

According to the above configuration, the user can grasp what kind of power supply unit needs to be prepared.

The assistance device may further include an acquisition part that acquires configuration information of the first bus and configuration information of the second bus, and based on the configuration information acquired by the acquisition part, the display control part may display on the display part in the first screen an image simulating the control device and an image simulating the first bus to which a unit is connected while reflecting an actual connection state, and display on the display part in the second screen an image simulating the control device and an image simulating the second bus to which a unit is connected while reflecting an actual connection state.

According to the above configuration, setting functions while viewing the screen that reflects the actual connection state can prevent a situation that a function that should be set for the first bus is erroneously set for the second bus.

A standard of the first bus and a standard of the second bus may be different.

According to the above configuration, it is possible to provide a control system that satisfies various needs.

The assistance device according to an aspect of the present invention may be realized by a computer, and in this case, a control program that realizes the assistance device on a computer by causing the computer to operate as each unit (software element) included in the assistance device, and a computer readable recording medium on which the control program is recorded, also fall within the scope of the present invention.

### Effects of the Invention

According to one aspect of the present invention, functions executable by multiple buses connected to a control device can be clarified.

### BRIEF DESCRIPTION OF THE DRAWINGS

[FIG. 1] is a diagram showing the overview of the present invention.
[FIG. 2] is a schematic configuration diagram of the control system 1 according to the present embodiment.
[FIG. 3] is a schematic diagram showing the hardware configuration of the CPU unit.
[FIG. 4] is a block diagram showing the main component configuration of the assistance device.
[FIG. 5] is an example of the edit screen when setting functions of the first bus and the second bus.
[FIG. 6] is an example of the edit screen when setting functions of the first bus.
[FIG. 7] is an example of the edit screen when setting functions of the second bus.
[FIG. 8] is an example of the overall view diagram of the control device 19, the unit 14, and the unit 15.

### DESCRIPTION OF THE EMBODIMENTS

Hereinafter, an embodiment according to one aspect of the present invention (hereinafter also referred to as "the present embodiment") will be described based on the drawings. The same or corresponding parts in the drawings are given the same reference numerals and the description thereof will not be repeated.

### §1 Application Example

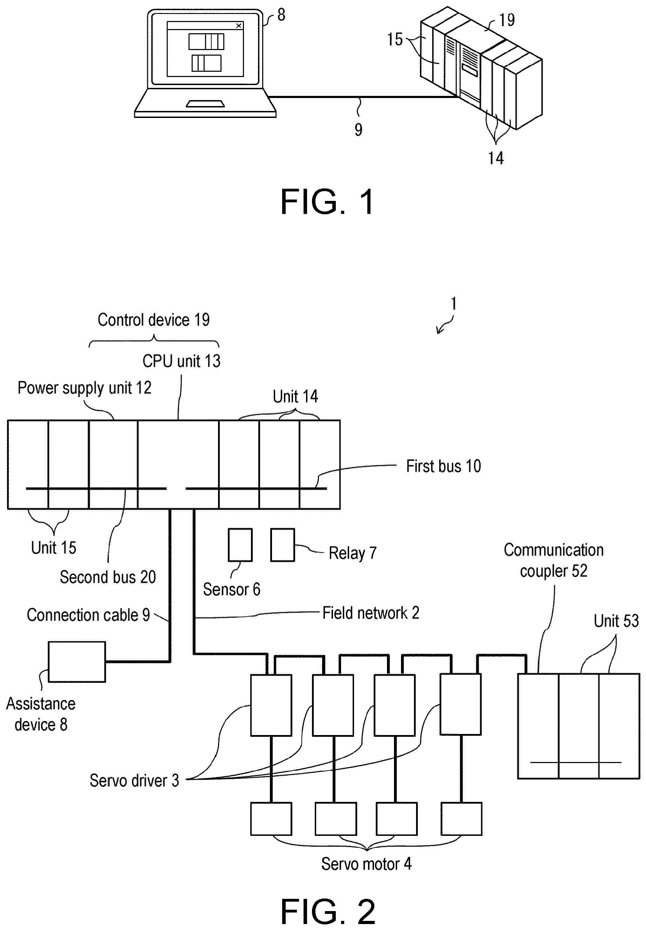

FIG. 1 is a diagram showing the overview of the present invention. An assistance device 8 is connected to a control device 19 via a connection cable 9. A unit 14 is connected to one side of the control device 19 via a first bus. A unit 15 is connected to the other side of the control device 19 via a second bus having a standard different from the standard of the first bus. An image showing a connection state between the control device 19 and the unit 14, and an image showing a connection state between the control device 19 and the unit 15 are displayed separately on a display of the assistance device 8.

The assistance device 8 is equipped with independent edit functions for each bus. Therefore, functions executable by each bus are displayed separately on the display of the assistance device 8. This clarifies the functions executable by each bus, so that a user can easily set the functions to be executed by each bus. Further, in the case of one of the buses being an existing device, function setting of the existing bus can be used in the same manner as before, thereby improving convenience for the user.

### §2 Configuration Example

### (System Configuration)

FIG. 2 is a schematic configuration diagram of a control system 1 according to the present embodiment. As shown in FIG. 2, the control system 1 includes the control device 19, the assistance device 8 connected to the control device 19 via the connection cable 9, multiple units 14 connected to the control device 19 via a first bus 10, multiple units 15 connected to the control device 19 via a second bus 20, and various control target devices connected to the control device 19 via a field network 2, namely, a servo driver 3 and a communication coupler 52 constituting a remote IO terminal, and a sensor 6 and a relay 7 which are field devices.

In FIG. 2, the number of units 14 connected to the control device 19 via the first bus 10 is three, but the number is not limited thereto, and may be one, two, or four or more. In addition, the number of units 15 connected to the control device 19 via the second bus 20 is two, but the number is not limited thereto, and may be one or three or more. The control device 19 and the units 14 are configured to be capable of exchanging data with each other via the first bus 10. The control device 19 and the units 15 are configured to be capable of exchanging data with each other via the second bus 20.

In the following, the units 14 are described as being connected to the right side of the control device 19, and the units 15 are described as being connected to the left side of the control device 19. In this case, the first bus 10 is connected to the right side of the control device 19, and the second bus 20 is connected to the left side of the control device 19.

The control device 19 is typically a PLC that controls a control target, and includes a power supply unit 12 and a CPU unit 13. The power supply unit 12 supplies power to the CPU unit 13, the units 14, and the units 15. Details of the CPU unit 13 will be described later.

Each unit configured as the CPU unit 13, the units 14, and the units 15 is provided by a control device manufacturer, so the first bus 10 and the second bus 20 are generally developed and used uniquely by each control device manufacturer. In contrast, regarding the field network 2, the standards or the like are often disclosed so that products from different manufacturers can be connected.

In the present embodiment, the standard of the first bus 10 is different from the standard of the second bus 20. For example, the standard of the first bus 10 and the standard of the second bus 20 differ in terms of communication bandwidth and communication speed.

The unit 14 is, for example, an IO unit related to general input/output processing, and manages input/output of binarized data such as on/off. That is, the unit 14 collects information as to whether a sensor such as the sensor 6 is in an on state in which the sensor detects a predetermined object or in an off state in which the sensor does not detect the object. Further, the unit 14 outputs either an on command for activation or an off command for deactivation to an output destination such as the relay 7 or an actuator.

The unit 14 is not limited to an IO unit, and a safety unit or a special unit may be used as the unit 14. The safety unit executes control arithmetic processing for realizing a safety function related to the control target. The safety function is, for example, a function for preventing user safety from being threatened by equipment, machinery, etc. The special unit has functions that are not supported by the IO unit, such as input/output of analog data, temperature control, and communication by a specific communication method.

The unit 15 is, for example, configured as a unit capable of processing large-capacity data compared to the unit 14. In order to process large-capacity data, the unit 15 may be provided with multiple Ethernet (registered trademark) ports.

The field network 2 transmits various data to be exchanged with the CPU unit 13. Various types of industrial Ethernet (registered trademark) can typically be used as the field network 2. As industrial Ethernet (registered trademark), for example, EtherCAT (registered trademark), Profinet IRT, MECHATROLINK (registered trademark)-III, Powerlink, SERCOS (registered trademark)-III, CIP Motion, and the like are known, and any of these may be adopted. Furthermore, a field network other than industrial Ethernet (registered trademark) may be used. For example, in the case of not performing motion control, DeviceNet, CompoNet/IP (registered trademark), and the like may be used. The control system 1 according to the present embodiment typically exemplifies a configuration in the case of adopting EtherCAT (registered trademark), which is industrial Ethernet (registered trademark), as the field network 2.

The servo driver 3 is connected to the CPU unit 13 via the field network 2, and drives the servo motor 4 according to command values from the CPU unit 13. Specifically, the servo driver 3 acquires command values such as position command values, speed command values, and torque command values from the control device 19 at regular intervals. In addition, the servo driver 3 acquires actual measurement values related to the operation of the servo motor 4, such as position, speed, and torque, from detectors such as position sensors and torque sensors connected to the shaft of the servo motor 4. The servo driver 3 sets the command values from the CPU unit 13 as target values, and performs feedback control using the actual measurement values as feedback values. That is, the servo driver 3 adjusts the current for driving the servo motor 4 so that the actual measurement values approach the target values.

FIG. 1 shows a system example that combines the servo motor 4 and the servo driver 3, but other configurations, for example, a system that combines a pulse motor and a pulse motor driver, may also be adopted.

A remote IO terminal configured by the communication coupler 52 and a unit 53 is connected to the field network 2. The remote IO terminal performs processing related to general input/output processing similarly to the unit 14. The communication coupler 52 and the unit 53 are configured to be capable of exchanging data with each other via a remote IO terminal bus.

### (Hardware Configuration of CPU Unit 13)

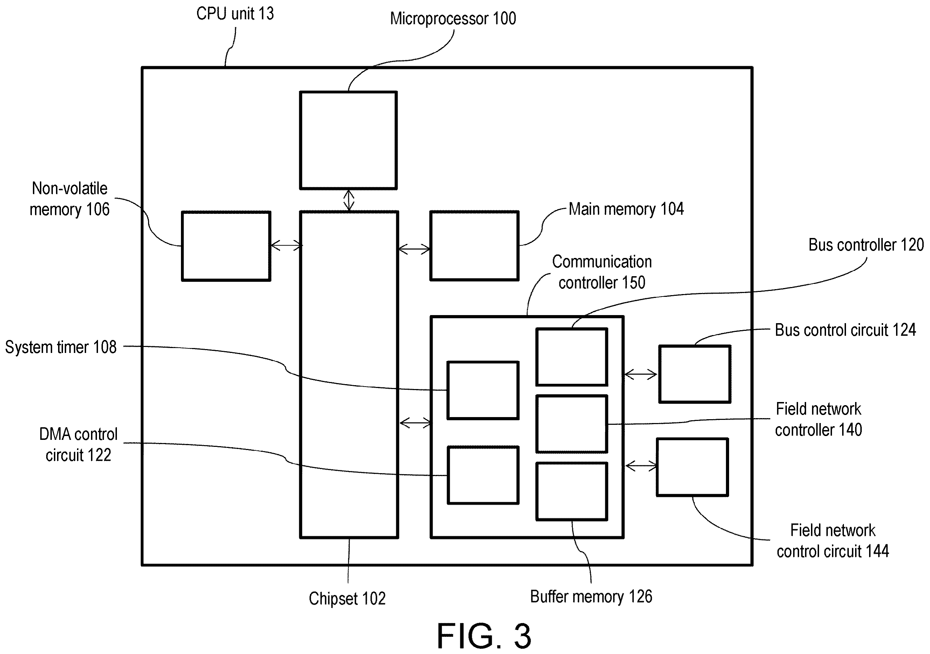

FIG. 3 is a schematic diagram showing the hardware configuration of the CPU unit 13. As shown in FIG. 3, the CPU unit 13 includes a microprocessor 100, a chipset 102, a main memory 104, a non-volatile memory 106, a system timer 108, a communication controller 150, a bus controller 120, a field network controller 140, and a USB connector (not shown).

The microprocessor 100 and the chipset 102 are typically configured in accordance with a general-purpose computer architecture. That is, the microprocessor 100 interprets and executes instruction codes sequentially supplied from the chipset 102 according to an internal clock. The chipset 102 exchanges internal data with various connected components, and generates instruction codes necessary for the microprocessor 100. Furthermore, the chipset 102 has a function to cache data or the like obtained as a result of executing arithmetic processing in the microprocessor 100.

The CPU unit 13 has the main memory 104 and the non-volatile memory 106 as storage means.

The main memory 104 is a volatile storage area and holds various programs to be executed by the microprocessor 100 after power is supplied to the CPU unit 13. The main memory 104 is also used as a working memory during execution of various programs by the microprocessor 100. Devices such as DRAM (Dynamic Random Access Memory) and SRAM (Static Random Access Memory) are used as such a main memory 104.

On the other hand, the non-volatile memory 106 non-volatilely holds data such as a realtime OS (Operating System), a scheduler program, a fixed-cycle program, an information processing program, and system setting parameters. These programs and data are copied to the main memory 104 for the microprocessor 100 to access as necessary. As such a non-volatile memory 106, a semiconductor memory such as a flash memory may be used, or a magnetic recording medium such as a hard disc drive, an optical recording medium such as DVD-RAM (Digital Versatile Disk Random Access Memory), or the like may be used.

The communication controller 150 is typically configured with hardware such as FPGA and ASIC, and is configured to be capable of transmitting and receiving data to and from the main memory 104 via the chipset 102. The communication controller 150 includes the system timer 108, the bus controller 120, a DMA (Dynamic Memory Access) control circuit 122, a buffer memory 126, and the field network controller 140. The communication controller 150 has a memory area used for data communication with the main memory 104, and performs transfer of data transferred from the main memory 104 to the bus controller 120 and the field network controller 140. The communication controller 150 also issues commands to the bus controller 120 and the field network controller 140 to transmit data transferred from the main memory 104. The communication controller 150 controls exchange of data via the first bus 10 and the second bus 20.

The system timer 108 generates an interrupt signal at regular intervals and provides the interrupt signal to the microprocessor 100. Typically, the system timer 108 is configured to generate interrupt signals at multiple different intervals according to hardware specifications, but the system timer 108 can also be set to generate interrupt signals at arbitrary intervals by an OS, BIOS (Basic Input Output System), or the like.

The buffer memory 126 functions as a transmission buffer for output data output to the units 14 and the units 15 via the first bus 10 and the second bus 20, and as a reception buffer for input data input from other units via the first bus 10 and the second bus 20. The output data created by arithmetic processing performed by the microprocessor 100 is originally stored in the main memory 104. Then, the output data to be transferred to a specific unit is read from the main memory 104 and temporarily held in the buffer memory 126. Further, the input data transferred from the units 14 and the units 15 is temporarily held in the buffer memory 126 and then moved to the main memory 104.

The DMA control circuit 122 performs transfer of output data from the main memory 104 to the buffer memory 126, and transfer of input data from the buffer memory 126 to the main memory 104.

The bus control circuit 124 performs processing to transmit output data of the buffer memory 126 and processing to receive first input data and store the first input data in the buffer memory 126, between the units 14 and the units 15 connected to the first bus 10 and the second bus 20. Typically, the bus control circuit 124 provides functions of a physical layer and a data link layer in the first bus 10 and the second bus 20.

The field network controller 140 controls exchange of data via the field network 2. That is, the field network controller 140 controls transmission of output data and reception of input data according to the standard of the field network 2 to be used. As described above, the field network 2 according to the EtherCAT (registered trademark) standard is adopted in the present embodiment, so the field network controller 140 including hardware for performing normal Ethernet (registered trademark) communication is used. In the EtherCAT (registered trademark) standard, a general Ethernet (registered trademark) controller that realizes a communication protocol according to the normal Ethernet (registered trademark) standard can be used. However, depending on the type of industrial Ethernet (registered trademark) adopted as the field network 2, a special specification Ethernet (registered trademark) controller corresponding to a dedicated specification communication protocol different from the normal communication protocol is used. In addition, in the case of adopting a field network other than industrial Ethernet (registered trademark), a dedicated field network controller according to the standard is used.

The field network control circuit 144 performs processing to transmit output data of the buffer memory 126 and processing to receive input data and store the input data in the buffer memory 126, between other devices connected to the field network 2. Typically, the field network control circuit 144 provides functions of a physical layer and a data link layer in the field network 2.

The USB connector is an interface for connecting the assistance device 8 and the CPU unit 13. Typically, programs executable by the microprocessor 100 of the CPU unit 13, which are transferred from the assistance device 8, are taken into the control device 19 via the USB connector.

### (Configuration of Assistance Device)

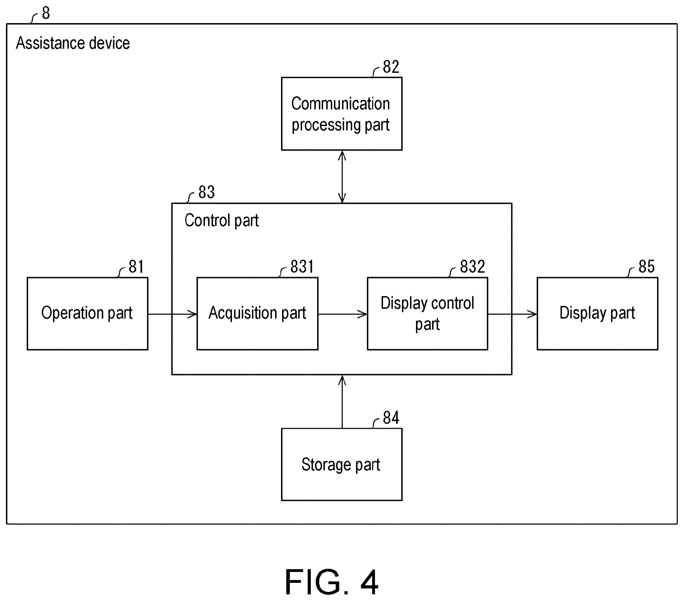

FIG. 4 is a block diagram showing the main component configuration of the assistance device 8. The assistance device 8 is a device for the user to generate programs and setting information to be executed by the control device 19. The assistance device 8 is, for example, a personal computer that executes programs stored in a DVD-ROM. The assistance device 8 may also download programs similar to the programs stored in the DVD-ROM from a higher-level host computer or the like through a network and execute the programs.

As shown in FIG. 4, the assistance device 8 includes an operation part 81, a communication processing part 82, a control part 83 that comprehensively controls functions of the assistance device 8, a storage part 84 that stores various data used by the assistance device 8, and a display part 85.

The operation part 81 is an input device that accepts input operations from the user and outputs the input operations to the control part 83. The operation part 81 is, for example, a keyboard, a mouse, or the like, and operations accepted by the operation part 81 are accepted as commands from the user in the control part 83. The display part 85 is a display that displays images according to control of the control part 83. The communication processing part 82 is an interface for communicating with the control device 19.

The control part 83 includes, as function blocks, an acquisition part 831 and a display control part 832. Each function block of the control part 83 can be realized by, for example, a CPU (Central Processing Unit) not shown reading out and executing programs stored in a storage part 130 configured with a ROM (Read Only Memory), NVRAM (Non-Volatile Random Access Memory), or the like into a RAM (Random Access Memory) not shown.

The acquisition part 831 accepts an input signal according to an input operation of the user accepted by the operation part 81. The acquisition part 831 identifies the operation performed by the user based on content of the input signal. The acquisition part 831 outputs an instruction according to the operation performed by the user to the display control part 832.

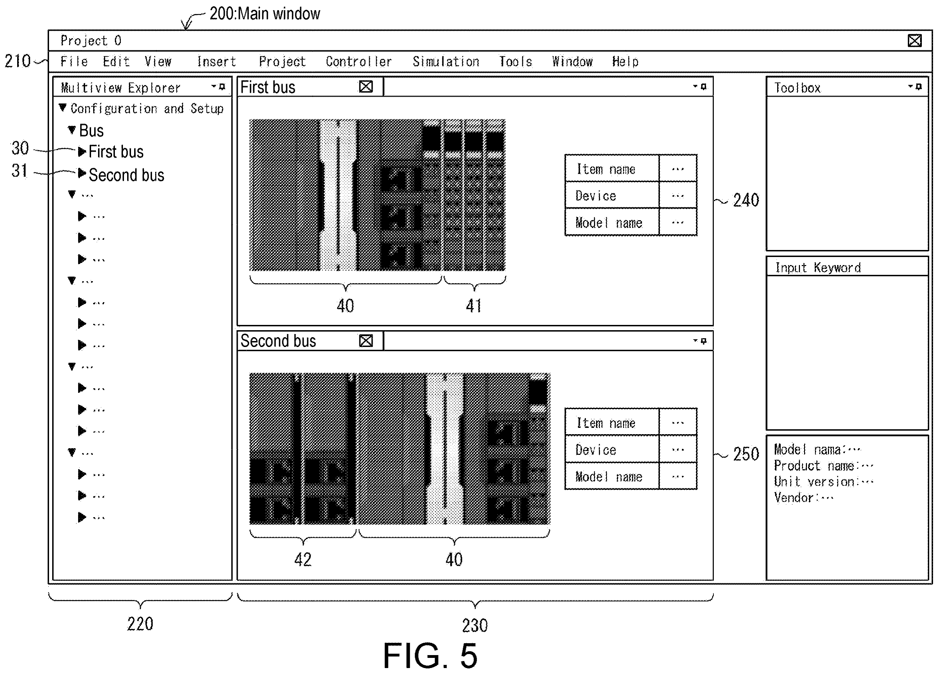

For example, in the case of the operation part 81 accepting an operation to display a main window 200 illustrated in FIG. 5, the acquisition part 831 outputs an instruction to the display control part 832 to display the main window 200 on the display part 85.

The display control part 832 displays an edit screen or the like of the first bus 10 and the second bus 20 on the display part 85 based on the operation performed by the user.

The storage part 130 stores (1) a control program executed by the assistance device 8, (2) an OS program, (3) an application program for executing various functions, and (4) various data read out when executing the application program. The data of (1) to (4) is stored in, for example, a non-volatile storage device such as a ROM, flash memory, EPROM (Erasable Programmable ROM), EEPROM (registered trademark) (Electrically EPROM), or HDD (Hard Disc Drive).

Next, the main window 200 displayed on the display part 85 in the case of the user setting functions of the first bus 10 and the second bus 20 using the assistance device 8 will be described.

### (Configuration of Main Window 200)

FIG. 5 is an example of the edit screen when setting functions of the first bus 10 and the second bus 20. As shown in FIG. 5, the main window 200 includes a navigation area 220 for the user to select an edit target device below a toolbar 210, and an edit area 230 for editing programs and the like.

In the navigation area 220, multiple menus for setting functions of the edit target device are displayed in a hierarchical structure. As shown in FIG. 5, the multiple menus include a menu 30 for setting functions of the first bus 10 and a menu 31 for setting functions of the second bus 20.

Here, description will be provided assuming a scene in which the user sets functions of the first bus 10 and functions of the second bus 20.

The user selects the menu 30 to set functions of the first bus 10. The acquisition part 831 detecting that the menu 30 has been selected by the user transmits a first signal indicating the detection to the display control part 832. The display control part 832 acquiring the first signal from the acquisition part 831 displays a first setting screen 240 for setting functions of the first bus 10 on the upper side of the edit area 230. An image 40 and an image 41 are displayed on the first setting screen 240. More specifically, the image 41 is displayed on the right side of the image 40. The image 40 is an image simulating the control device 19. The image 41 is an image simulating the unit 14 connected to the control device 19 via the first bus 10. As described above, since the unit 14 is connected to the right side of the control device 19, the display control part 832 displays the image 40 and the image 41 while reflecting the actual connection state.

Subsequently, the user selects the menu 31 to set functions of the second bus 20. The acquisition part 831 detecting that the menu 31 has been selected by the user transmits a second signal indicating the detection to the display control part 832. The display control part 832 acquiring the second signal from the acquisition part 831 displays a second setting screen 250 for setting functions of the second bus 20 on the lower side of the edit area 230. An image 40 and an image 42 are displayed on the second setting screen 250. More specifically, the image 42 is displayed on the left side of the image 40. The image 42 is an image simulating the unit 15 connected to the control device 19 via the second bus 20. As described above, since the unit 15 is connected to the left side of the control device 19, the display control part 832 displays the image 40 and the image 42 while reflecting the actual connection state.

Since the first setting screen 240 for setting functions of the first bus 10 and the second setting screen 250 for setting functions of the second bus 20 are divided vertically and displayed separately in this way, functions executable by the respective buses are also displayed separately. This clarifies functions executable by each bus, so that the user can easily set functions to be executed by each bus.

Since the user can set functions of the first bus 10 and the second bus 20 while viewing the first setting screen 240 and the second setting screen 250 that reflect the actual connection state, convenience for the user is improved. In addition, setting functions while viewing the screens that reflect the actual connection state can prevent a situation that a function that should be set for the first bus 10 is erroneously set for the second bus 20.

In the example shown in FIG. 5, the first setting screen 240 is displayed on the upper side of the edit area 230, and the second setting screen 250 is displayed on the lower side of the edit area 230, but the display may be reversed vertically. In addition, the first setting screen 240 and the second setting screen 250 may be displayed in a left-right direction rather than in an updown direction of the edit area 230. That is, it is sufficient that the first setting screen 240 and the second setting screen 250 are displayed separately, and the arrangement locations of the screens may be arbitrary.

Names of the buses that can be set in the first setting screen 240 and the second setting screen 250 may be displayed on tabs of the first setting screen 240 and the second setting screen 250. In the example shown in FIG. 5, "first bus" is displayed on the tab of the first setting screen 240, and "second bus" is displayed on the tab of the second setting screen 250. This display allows the user to grasp at a glance the buses that can be set in the corresponding screens.

### (Difference between Functions of First Bus 10 and Functions of Second Bus 20)

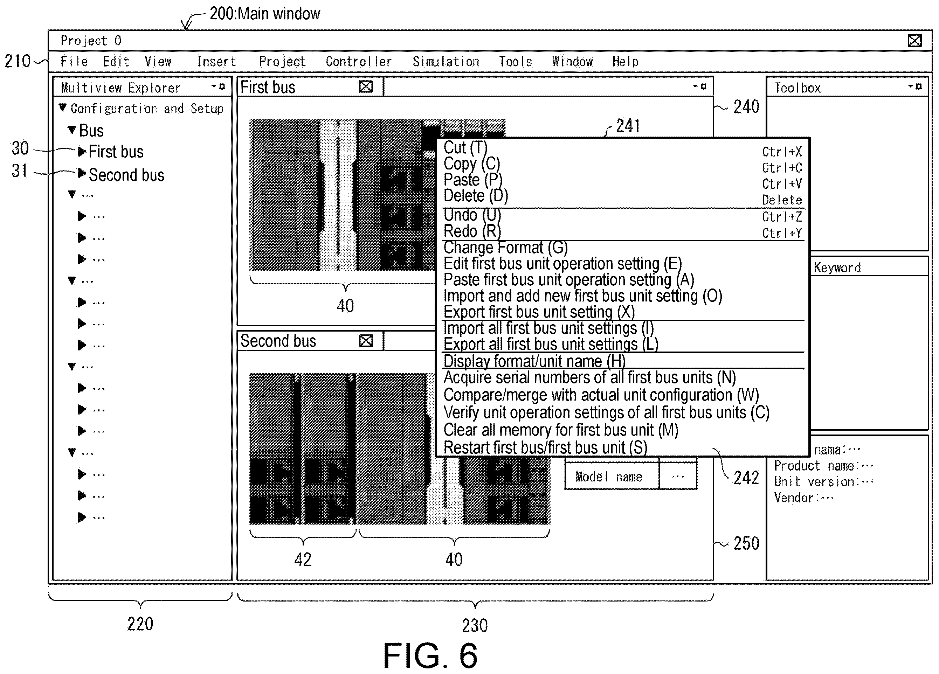

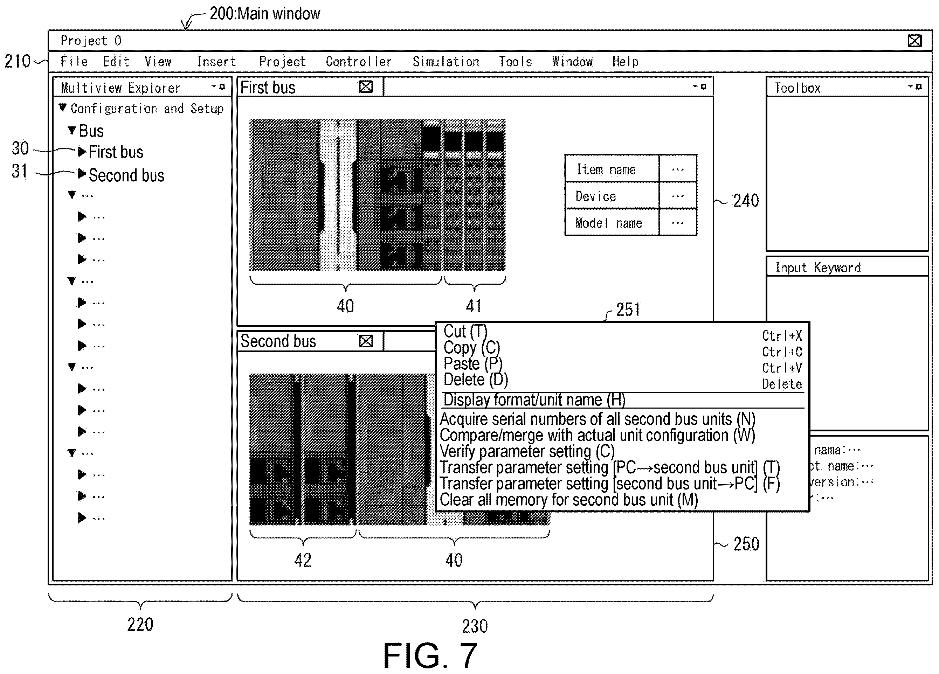

FIG. 6 is a diagram showing an example of the screen for setting functions of the first bus 10. FIG. 7 is a diagram showing an example of the screen for setting functions of the second bus 20. Differences between functions of the first bus 10 and functions of the second bus 20 will be described with reference to FIG. 6 and FIG. 7.

First, an example of functions settable to the first bus 10 will be described with reference to FIG. 6. As shown in FIG. 6, in response to the image 40 on the first setting screen 240 being selected by the user, a menu screen 241 is displayed. The menu screen 241 includes multiple menus for setting functions of the first bus 10. Among the multiple menus, the first bus 10 has a restart function, as shown in a menu 242. The "restart" referred to here is a function for restarting the first bus 10. The user can select the menu 242 to set the restart function for the first bus 10.

In this way, while it is possible to set a restart function for the first bus 10, it is not possible to set a restart function for the second bus 20. This point will be described with reference to FIG. 7. As shown in FIG. 7, in response to the image 40 on the second setting screen 250 being selected by the user, a menu screen 251 is displayed. The menu screen 251 includes multiple menus for setting functions of the second bus 20. Upon comparison between the menu screen 241 shown in FIG. 6 and the menu screen 251 shown in FIG. 7, it can be seen that while the menu screen 241 has the menu 242 for setting a restart function, the menu screen 251 does not have a menu for setting a restart function.

Thus, in the present embodiment, functions settable to the first bus 10 and functions settable to the second bus 20 are different. Of course, there are also functions that can be set in common for the first bus 10 and the second bus 20, but there are also functions that can be set only for the first bus 10 or functions that can be set only for the second bus 20.

As shown in FIG. 6 and FIG. 7, by separately displaying functions settable to the first bus 10 and functions settable to the second bus 20, the user can easily grasp the functions executable by each bus.

As shown in FIG. 6, the menu screen 241 may include not only a menu for setting functions of the first bus 10, but also a menu for setting functions of the unit 14 connected to the first bus 10. Similarly, as shown in FIG. 7, the menu screen 251 may include not only a menu for setting functions of the second bus 20, but also a menu for setting functions of the unit 15 connected to the second bus 20.

### (Overall View Diagram)

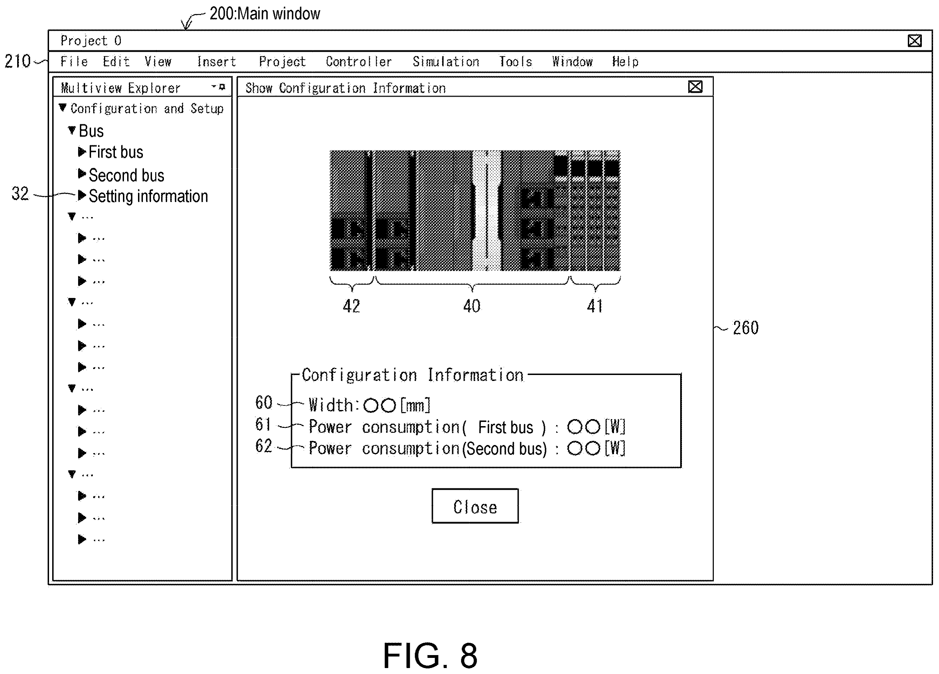

FIG. 8 is an example of the overall view diagram of the control device 19, the unit 14, and the unit 15. The case assumed here is that the user wants to grasp the connection state and overall view, width information, power consumption, etc. of the control device 19, the unit 14, and the unit 15. The user selects a menu 32 to obtain such information. The acquisition part 831 detecting that the menu 32 has been selected by the user transmits a third signal indicating the detection to the display control part 832. The display control part 832 acquiring the third signal from the acquisition part 831 displays an overall view screen 260. On the overall view screen 260, an image 40, an image 41, and an image 42 are displayed. More specifically, the image 41 is displayed on the right side of the image 40, and the image 42 is displayed on the left side of the image 40.

In the case of the menu 32 being selected by the user, the display control part 832 acquires configuration information of the first bus 10 and the unit 14 connected to the first bus 10, and configuration information of the second bus 20 and the unit 15 connected to the second bus 20. The configuration information includes, for example, information such as connection state, operation setting, dimensions, and power consumption.

The unit 14 is connected to the right side of the control device 19, and the unit 15 is connected to the left side of the control device 19. By acquiring the configuration information, the display control part 832 can display the image 40, the image 41, and the image 42 while reflecting the actual connection state.

Further, by acquiring the configuration information, the display control part 832 can display overall width information 60, power consumption information 61 of the first bus 10, and power consumption information 62 of the second bus 20.

By displaying the overall view screen 260 as shown in FIG. 8, the user can grasp the connection state and overall view of the control device 19, the unit 14, and the unit 15 at a glance. By displaying the overall width information 60 from the left end of the unit 15 to the right end of the unit 14 together with the overall view diagram of the image 40, the image 41, and the image 42, the user can grasp whether it is possible to store the control device 19, the unit 14, and the unit 15 in a control panel. In addition, the user can grasp what size the control panel should be prepared to store the control device 19, the unit 14, and the unit 15. By displaying the power consumption information 61 of the first bus 10 and the power consumption information 62 of the second bus 20 together with the image 41 and the image 42, the user can grasp what kind of power supply unit needs to be prepared.

### §3 Operation and Effect

The assistance device 8 includes the display part 85 that is communicably connected to the control device 19 and capable of displaying predetermined information; and the display control part 832 that separately displays on the display part 85 the first setting screen 240 (first screen) for setting functions of the first bus 10 connected to one side of the control device 19, and the second setting screen 250 (second screen) for setting functions of the second bus 20 connected to the control device 19 on the opposite side from the one side.

According to the above configuration, the first setting screen 240 for setting functions of the first bus 10 and the second setting screen 250 for setting functions of the second bus 20 are divided vertically and displayed separately, so the functions executable by each bus are also displayed separately. This clarifies the functions executable by each bus, so that the user can easily set the functions to be executed by each bus. In addition, the user can easily grasp which bus function is being set. Further, in the case of one of the buses being an existing device, the function setting method for the existing bus can be used in the same manner as before, thereby improving convenience for the user.

The functions settable to the first bus 10 and the functions settable to the second bus 20 may be different.

According to the above configuration, by separately displaying the functions settable to the first bus 10 and the functions settable to the second bus 20, the functions settable to each bus become clear, allowing the user to easily grasp the functions executable by each bus. Further, by making the functions settable to the first bus 10 different from the functions settable to the second bus 20, one bus can correspond to existing functions and the other bus can correspond to new functions. This enables the existing functions to be used in the same manner as before without changing operability, thereby improving convenience for the user.

The display control part 832 may display on the display part 85 the image 40 simulating the control device 19, the image 41 simulating the unit 14 connected to the first bus 10, and the image 42 simulating the unit 15 connected to the second bus 20 while reflecting the actual connection state.

According to the above configuration, the user can grasp the connection state and overall view of the control device 19, the unit 14, and the unit 15 at a glance.

The display control part 832 may display on the display part 85 information of a width (width information 60) that is a sum of the width of the control device 19, the width of the first bus 10, and the width of the second bus 20.

According to the above configuration, the user can grasp whether it is possible to store the control device 19, the unit 14, and the unit 15 in a control panel.

The display control part 832 may display on the display part 85 information of power consumption of the first bus 10 (power consumption information 61) and information of power consumption of the second bus 20 (power consumption information 62).

According to the above configuration, the user can grasp what kind of power supply unit needs to be prepared.

The assistance device 8 may further include the acquisition part 831 that acquires configuration information of the first bus 10 and configuration information of the second bus 20. Based on the configuration information acquired by the acquisition part 831, the display control part 832 may display on the display part 85 in the first setting screen 240 the image 40 simulating the control device 19 and the image 41 simulating the first bus 10 to which the unit 14 is connected while reflecting the actual connection state, and may display on the display part 85 in the second setting screen 250 the image 40 simulating the control device 19 and the image 42 simulating the second bus 20 to which the unit 15 is connected while reflecting the actual connection state.

According to the above configuration, setting functions while viewing the screen that reflects the actual connection state can prevent a situation that a function that should be set for the first bus 10 is erroneously set for the second bus 20.

The standard of the first bus 10 and the standard of the second bus 20 may be different.

According to the above configuration, it is possible to provide the control system 1 that satisfies various needs.

### [Implementation Example by Software]

The function as the assistance device 8 can be realized by a program for causing a computer to function as the assistance device 8, which is a program for causing a computer to function as each control block of the assistance device 8.

In this case, the assistance device 8 includes a computer having at least one device (for example, processor) and at least one storage device (for example, memory) as hardware for executing the program. Each function described in the above embodiment is realized by the computer executing the program.

The program may be recorded on one or multiple recording media that are non-transitory and readable by the computer. The recording medium may or may not be provided in the assistance device 8. In the latter case, the program may be supplied to the assistance device 8 via any wired or wireless transmission medium.

Further, some or all of the functions of each control block can be realized by a logic circuit. For example, an integrated circuit in which a logic circuit functioning as each control block is formed is also included in the scope of the present invention. In addition to this, it is also possible to realize the function of each control block by, for example, a quantum computer.

Furthermore, each processing described in the above embodiment may be executed by AI (Artificial Intelligence). In this case, the AI may operate on the assistance device 8, or may operate on another device (for example, edge computer or cloud server).

The present invention is not limited to the above-described embodiments, and it is possible to make various modifications within the scope shown in the claims.

### [Summary]

Further, the present invention can also be expressed as follows.

An assistance device according to aspect 1 of the present invention is an assistance device communicably connected to a control device, and includes a display part capable of displaying predetermined information; and a display control part separately displaying on the display part a first screen for setting a function of a first bus connected to one side of the control device, and a second screen for setting a function of a second bus connected to the control device on an opposite side from the one side.

In the assistance device according to aspect 2 of the present invention, based on the above aspect 1, a function settable to the first bus and a function settable to the second bus may be different.

In the assistance device according to aspect 3 of the present invention, based on the above aspect 1 or 2, the display control part may display on the display part an image simulating the control device, an image simulating a unit connected to the first bus, and an image simulating a unit connected to the second bus while reflecting an actual connection state.

In the assistance device according to aspect 4 of the present invention, based on the above aspect 3, the display control part may display on the display part information of a width that is a sum of a width of the control device, a width of the first bus, and a width of the second bus.

In the assistance device according to aspect 5 of the present invention, based on the above aspect 3, the display control part may display on the display part information of power consumption of the first bus and information of power consumption of the second bus.

The assistance device according to aspect 6 of the present invention, based on any one of the above aspects 1 to 5, may further include an acquisition part that acquires configuration information of the first bus and configuration information of the second bus, and based on the configuration information acquired by the acquisition part, the display control part may display on the display part in the first screen an image simulating the control device and an image simulating the first bus to which a unit is connected while reflecting an actual connection state, and display on the display part in the second screen an image simulating the control device and an image simulating the second bus to which a unit is connected while reflecting an actual connection state.

In the assistance device according to aspect 7 of the present invention, based on any one of the above aspects 1 to 6, a standard of the first bus and a standard of the second bus may be different.

### Description of Reference Numerals

8 assistance device
10 first bus
14, 15 unit
19 control device
20 second bus
40, 41, 42 image
60 width information
61, 62 power consumption information
831 acquisition part
832 display control part
85 display part
240 first setting screen
250 second setting screen
260 overall view screen

## Claims

1. An assistance device communicably connected to a control device, the assistance device comprising:
a display part capable of displaying predetermined information; and
a display control part separately displaying on the display part a first screen for setting a function of a first bus connected to one side of the control device, and a second screen for setting a function of a second bus connected to the control device on an opposite side from the one side.

2. The assistance device according to claim 1, wherein a function settable to the first bus and a function settable to the second bus are different.

3. The assistance device according to claim 1, wherein the display control part displays on the display part an image simulating the control device, an image simulating a unit connected to the first bus, and an image simulating a unit connected to the second bus while reflecting an actual connection state.

4. The assistance device according to claim 3, wherein the display control part displays on the display part information of a width that is a sum of a width of the control device, a width of the first bus, and a width of the second bus.

5. The assistance device according to claim 3, wherein the display control part displays on the display part information of power consumption of the first bus and information of power consumption of the second bus.

6. The assistance device according to claim 1, further comprising an acquisition part that acquires configuration information of the first bus and configuration information of the second bus,
wherein based on the configuration information acquired by the acquisition part, the display control part displays on the display part in the first screen an image simulating the control device and an image simulating the first bus to which a unit is connected while reflecting an actual connection state, and displays on the display part in the second screen an image simulating the control device and an image simulating the second bus to which a unit is connected while reflecting an actual connection state.

7. The assistance device according to any one of claims 1 to 6, wherein a standard of the first bus and a standard of the second bus are different.

8. An assistance method used in an assistance device that is communicably connected to a control device and comprises a display part capable of displaying predetermined information, the assistance method comprising:
displaying separately on the display part a first screen for setting a function of a first bus connected to one side of the control device, and a second screen for setting a function of a second bus connected to the control device on an opposite side from the one side.

9. An assistance program used in an assistance device that is communicably connected to a control device and comprises a display part capable of displaying predetermined information, the assistance program:
causing a computer to execute processing for displaying separately on the display part a first screen for setting a function of a first bus connected to one side of the control device, and a second screen for setting a function of a second bus connected to the control device on an opposite side from the one side.
